# EUROPEAN PATENT SPECIFICATION

(11) **EP 3 355 827 B1**
(45) Date of publication and mention of the grant of the patent: **29.07.2020**
(21) Application number: 16795148.2
(22) Date of filing: 30.09.2016
(51) Int. Cl.: A61C 8/00, A61C 19/02

(54) **CONTAINER FOR DENTAL IMPLANTS**
BEHÄLTER FÜR ZAHNIMPLANTATE
CONTENANT POUR IMPLANTS DENTAIRES

(30) Priority: 02.10.2015 IT UB20154087
(43) Date of publication of application: 08.08.2018
(73) Proprietor: Ferigo, Renzo, 41124 Modena (MO) (IT)
(72) Inventor: Ferigo, Renzo, 41124 Modena (MO) (IT)
(74) Representative: Brunacci, Marco
(86) International application number: PCT/IB2016/055852
(87) International publication number: WO 2017/056044

(56) References cited:
- EP-A1- 2 008 608
- EP-A1- 2 233 109
- EP-A2- 1 013 237

## Description

### Technical Field

The present invention relates to a container for dental implants.

### Background Art

With particular reference to the dental surgery sector, the use is known of dental implants to rehabilitate from the aesthetic and functional viewpoint a patient suffering from partial and/or total edentulism.

Generally, dental implants are surgically inserted in the mandibular or maxillary bone, in such a way as to allow the connection of prostheses, fixed or mobile, for the return of the masticatory function.

To date, dental implants are sold in containers which comprise a holding base and a containment body which extends from the lower base to an upper open extremity with which a closure element is associable.

The containment body has a substantially cylindrical shape and is internally provided with at least a supporting ring substantially parallel to the holding base and having a through hole which allows the passage to measure of the dental implant and the retention of the latter in a vertical position.

Another type of known container has the containment body internally provided with a first supporting ring having a through hole and a second supporting ring defining a holding surface for the dental implant retained by the first supporting ring.

EP 2233109 A1 discloses another housing container for an implant fixture.

It is essential for the dental implant to be extracted from the container thus avoiding any kind of contamination; this means that, to facilitate the operations of extraction from the container and insertion in the mandibular or maxillary bone, avoiding the dental implant from accidentally falling, it is important for the latter to be retained within the container in a vertical position.

The closure element has an internal thread screwable to a corresponding thread surrounding the open extremity of the hollow body and furthermore, is provided with a housing seat for a supporting element for dental implantology.

It is useful to point out that in the present discussion by "supporting element for dental implantology" is meant the set of devices surgically inserted into the mandibular or maxillary bone and adapted to allow the connection of prostheses, fixed or mobile, for the restoration of the masticatory function, such as, e.g., locking screws, stumps and the like.

These containers of known type have certain drawbacks due to the fact that their manufacturing process and that of the related internal supporting rings is extremely expensive, and laborious as regards the manufacturing process of the individual supporting rings which are made of titanium, a known material with cost levels which are not negligible.

To this must be added the fact that each container must be provided with an identification code showing the structural characteristics and measurements of the dental implant; in the present case, this identification code is printed on the outer surface of the hollow body, thus further increasing the manufacturing costs of the container itself.

Furthermore, upon completion of the dental implant grafting surgical operation, the containers are eliminated without possibility of recovery which leads to an enormous waste of material.

Nevertheless, to solve the above mentioned problems related to the manufacturing costs of the containers, a particular type of containment means for dental implants has been developed.

Such containment means have two surfaces associated with each other by means of a lever mechanism consisting of a spring; more specifically, the containment means mentioned above are totally similar to commonly-used pegs.

It is easy to appreciate how such containment means represent a rather rudimentary and unsatisfactory solution compared to the type of previouslydescribed containers, in fact, the latter ensure neither high standards of hygiene, nor the correct maintenance of the dental implant in a vertical position.

### Description of the Invention

The main aim of the present invention is to provide a container for dental implants obtained through a manufacturing process having reduced costs with respect to the manufacturing costs of the containers of known type.

Another object of the present invention is to provide a container for dental implants obtained through a simple manufacturing process and which allows achieving the production in series of a large number of containers.

A further object of the present invention is to provide a container for dental implants which allows to overcome the mentioned drawbacks of the prior art within the ambit of a simple, rational, easy, effective to use and affordable solution.

The above mentioned objects are achieved by the present container for dental implants having the characteristics of claim 1.

### Brief Description of the Drawings

Other characteristics and advantages of the present invention will become better evident from the description of a preferred, but not exclusive, embodiment of a container for dental implants, illustrated by way of an indicative, but nonlimiting example in the accompanying drawings, in which:

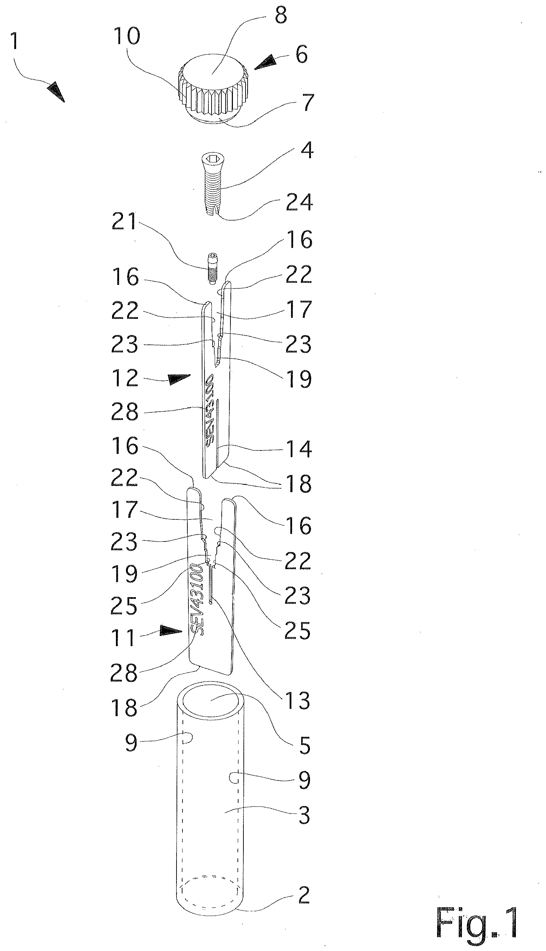

Figure 1 is an exploded view of the container according to the invention;
Figure 2 is an axonometric view of the container according to the invention;
Figure 3 is a front view of a detail of the container according to the invention;
Figure 4 is an axonometric view of the detail of Figure 3.

### Embodiments of the Invention

With particular reference to such figures, reference numeral 1 globally indicates a container for dental implants.

The container 1 comprises a holding base 2, an open upper extremity 5 and a closure element 6 associable with the upper extremity itself.

It is specified that within the present discussion expressions such as "top", "bottom", "upper", "lower", "above", "below" and the like, are to be considered with reference to a holding position, in which the container 1 is placed with the holding base 2 on a substantially horizontal surface.

Furthermore, with reference to the normal holding position of the container 1 it is also possible to identify a substantially vertical longitudinal axis A.

As can be seen in the illustrations, the container 1 has a containment body 3 which extends from the holding base 2 to the upper extremity 5.

Advantageously, the containment body 3 has a substantially tubular and elongated shape.

Alternative embodiments cannot however be ruled out in which the containment body 3 has a different shape, e.g. having a substantially square cross section, star-shaped or the like.

The closure element 6 has a first portion 7 insertable into the upper extremity 5 and a second portion 8 which remains outside of the container 1.

In a preferred embodiment shown in the illustrations, the first portion 7 has the shape of a straight cylinder with diameter substantially mating with the internal diameter of the containment body 3.

In particular, the first portion 7 is shaped in such a way as to insert substantially to measure or with slight interference inside the upper extremity 5, adhering laterally to the internal walls 9 of the containment body 3; this allows the hermetic closing of the container 1, thus eliminating the risk of contamination by environmental factors and ensuring the maintenance of the hygienic standards set by industry regulations.

Usefully, the second portion 8 has a circle shape coaxial to the first portion 7, with diameter substantially greater than the diameter of the first portion 7 and defining a gripping surface 10 adapted to facilitate the grip of the closure element 6 by an operator.

Specifically, the gripping surface 10 is substantially knurled, in such a way as to facilitate its gripping even if the operator wears gloves and/or other safety devices.

According to the invention, the container 1 comprises a body 11, 12 insertable to measure in the container itself and, in turn, comprising at least a first housing seat 15 of a dental implant 4.

Furthermore, the body 11, 12 comprises a second housing seat 20 of a supporting element 21 for dental implantology.

Alternative solutions cannot however be ruled out in which there are more than two housing seats 15, 20, such as e.g. three, four, etc. housing seats 15, 20.

Preferably, the second housing seat 20 is arranged below the first housing seat 15.

It is also pointed out that by "supporting element for dental implantology" is meant the set of devices surgically inserted into the mandibular or maxillary bone and adapted to allow the connection of prostheses, fixed or mobile, for the restoration of the masticatory function, such as, e.g., locking screws, stumps and the like.

In a preferred embodiment shown in the illustrations, the supporting element 21 is a tightening screw.

The body 11, 12 comprises two sheet-shaped elements associable with each other by interposition of coupling means 13, 14 to define at least one of the housing seats 15, 20.

Conveniently, each sheet-shaped element 11, 12 is made at least partly of metal.

Alternative embodiments cannot also be ruled out in which the sheet-shaped elements 11, 12 are made e.g. of a polymeric material.

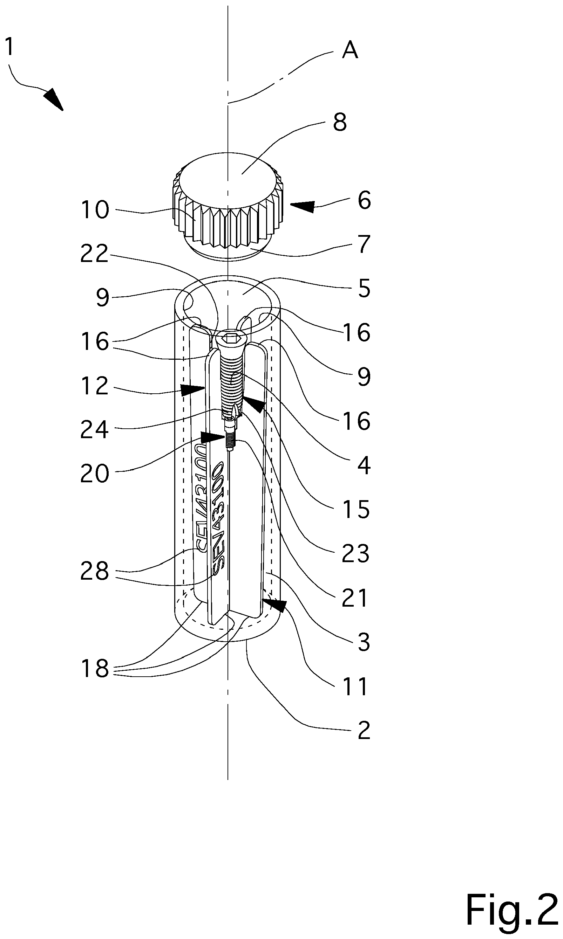

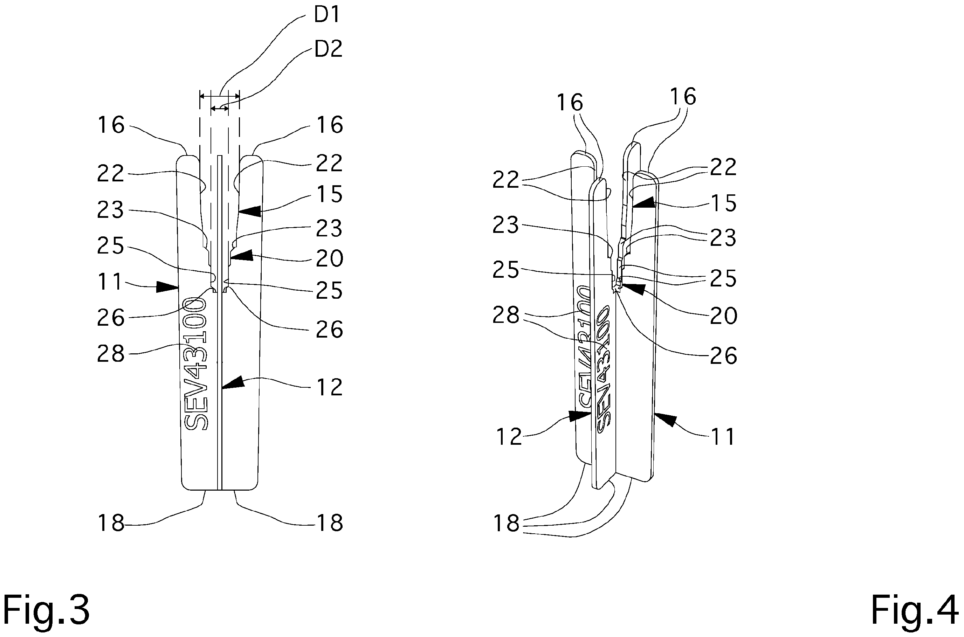

The sheet-shaped elements 11, 12 comprise a first sheet-shaped element 11 and a second sheet-shaped element 12 each of which defining a lying plane and, in an assembly configuration shown in Figures 2, 3 and 4, such lying planes are orthogonal the one to the other.

As an alternative, the body 11, 12 can comprise more than two sheet-shaped elements, e.g. three, four etc. sheet-shaped elements.

In the scope of the present discussion by "assembly configuration" shall be meant the joining together of the two sheet-shaped elements 11, 12 to define the body inserted to measure in the containment body 3 and in abutment on the holding base 2 (Figure 2).

Each sheet-shaped element 11, 12 comprises a groove 17, 19 formed in the proximity of the upper end portion 16 of the same and defining at least one of the housing seats 15, 20.

As can be seen in the illustrations, each sheet-shaped element 11, 12 has a substantially elongated shape with the upper end portion 16 provided with the groove 17, 19 extending towards the lower end portion 18.

In detail, each groove 17, 19 comprises an upper portion 17 defining the first housing seat 15 and a lower portion 19 defining the second housing seat 20.

The upper portion 17 comprises first shaped edges 22 so as to allow the insertion to measure of the dental implant 4 in the first housing seat 15.

Advantageously, the first edges 22 have a joining narrowing 23 to the lower portion 19 which is adapted to abut against the dental implant 4.

In more detail, the first edges 22 have an extension substantially parallel to the longitudinal axis A and end with the joining narrowing 23.

In this regard it should be underlined that the upper portion 17 has a first diameter D1 substantially equal to the diameter of the dental implant 4 in such a way as to ensure the correct positioning of same inside the first housing seat 15 and, at the same time, facilitate the extraction thereof from the latter.

To this must be added the fact that the dental implant 4 is substantially resting on the joining narrowing 23.

As can be seen in the illustrations, in fact, the joining narrowing 23 comprises an abutment surface which extends obliquely with respect to the longitudinal axis A; this means that the abutment surface 23 is neither vertical nor horizontal with respect to the longitudinal axis A.

In the assembly configuration (Figures 2, 3 and 4), the container 1 has four abutment surfaces 23 substantially orthogonal to each other and able to abut against the bottom 24 of the dental implant 4; more specifically, each abutment surface 23 is adapted to retain in a vertical position the dental implant 4 and, at the same time, to allow the spatial continuity between the first housing seat 15 and the second housing seat 20.

In other words, the abutment surfaces 23 allow keeping the dental implant 4 in position with the same effects that would be obtained with a continuous surface; to this must be added the fact that the present spatial continuity between the two housing seats 15, 20 ensures the rapid and sequential extraction from the container 1 of the dental implant 4 and of the supporting element 21, respectively.

At the same time, the lower portion 19 comprises second shaped edges 25 so as to allow the insertion to measure of the supporting element 21 in the second housing seat 20.

Advantageously, the second edges 25 are converging towards each other to define a holding portion 26 to hold the supporting element 21.

The second edges 25 have two sections substantially parallel to the longitudinal axis A and end, with a section orthogonal to the longitudinal axis itself, by converging on each other so as to define the holding portion 26.

In detail, the lower portion 19 has a second diameter D2 smaller than the first diameter D1 and substantially equal to the diameter of the supporting element 21.

The coupling means 13, 14 comprise a pair of notches each of which is formed in the proximity of the lower end portion 18 of the sheet-shaped elements 11, 12.

In detail, the notches 13, 14 are formed below the housing seats 15, 20 and are adapted to allow the association, by mutual sliding, of the sheet-shaped elements 11, 12.

The notches 13, 14 comprise a first notch 13 formed on at least one of the first sheet-shaped element 11 and the second sheet-shaped element 12 and a second notch 14 formed on the other of the first sheet-shaped element 11 and the second sheet-shaped element 12.

Advantageously, the first notch 13 is formed on the first sheet-shaped element 11 and the second notch 14 is formed on the second sheet-shaped element 12.

With reference to the particular embodiment shown in the illustrations, the first notch 13 extends from the holding portion 26 of the lower portion 19.

Alternative embodiments cannot however be ruled out wherein the container 1 has only the first housing seat 15 and, consequently, each groove 17, 19 has only the upper portion 17; this means that the first notch 13 would extend from the lower extremity of the upper portion 17.

The first notch 13 and the second notch 14 extend along a longitudinal direction and mating with each other.

As is visible in the illustrations, the notches 13, 14 are arranged centrally on each sheet-shaped element 11, 12, in this case they coincide with the longitudinal axis A.

The first notch 13, in the assembly configuration, is adapted to accommodate a portion of the second sheet-shaped element 12 and the second notch 14 is adapted to accommodate a portion of the first sheet-shaped element 11.

In other words, the first notch 13, extending downwards, is adapted to accommodate the portion of the second sheet-shaped element 12 comprised between the lower portion 19 and the second notch 14 and, vice versa, the second notch 14, extending upwards, is adapted to accommodate the portion of the first sheet-shaped element 11 comprised between the first notch 13 and the lower end portion 18.

This way, the first sheet-shaped element 11 and the second sheet-shaped element 12 are associable with each other, by mutual sliding, along the longitudinal direction.

It is useful to point out that by "mutual sliding" is meant the sliding of each sheet-shaped element 11, 12 with respect to the other sheet-shaped element 11, 12, in such a way as to allow them to slot into one another to define the aforementioned assembly configuration.

Alternative embodiments cannot however be ruled out in which the sheet-shaped elements 11, 12 are associable with one another by interposition of a layer of adhesive material, i.e., by gluing.

Furthermore, each sheet-shaped element 11, 12 has an identification code 28 which varies according to the size, shape and technical characteristics of the dental implant 4 and of the supporting element 21.

As an alternative, each sheet-shaped element 11, 12 can have an adhesive label bearing the identification code 28.

The operation of the present invention is as follows.

During assembly the first sheet-shaped element 11 and the second sheet-shaped element 12 are made to mutually slide along the longitudinal direction in such a way that each notch 13, 14 accommodates a portion of the other sheet-shaped element 11, 12, defining the single body 11, 12 insertable to measure inside the containment body 3.

At this point, the supporting element 21 is housed inside the second housing seat 20 and the dental implant 4 is housed inside the first housing seat 15.

Finally, the container 1 is closed by means of the closure element 6 and placed on the market.

Before the insertion of the dental implant 4 in the mandibular and/or maxillary bone of a patient, the operator opens the container 1 by grasping the closure element 6, by means of the gripping surface 10.

Once the container 1 has been opened, the operator takes the dental implant 4 by means of a surgical tool and consequently also extracts the supporting element 21.

It has in practice been ascertained that the described invention achieves the intended objects.

In particular the fact is underlined that the particular solution of providing two sheet-shaped elements associable the one with the other to define two housing seats permits providing a container for dental implants having a manufacturing process with greatly reduced cost compared to the manufacturing costs of the containers of known type.

## Claims

1. Container (1) for dental implants, comprising a holding base (2), an upper extremity (5) and at least a closure element (6) associable with said upper extremity (5), a body (11, 12) insertable to measure in said container (1) and, in turn, comprising at least a first housing seat (15) of a dental implant (4), **characterized by** the fact that said body (11, 12) comprises at least a second housing seat (20) of a supporting element (21) for the dental implantology, and at least two sheet-shaped elements associable with each other by interposition of coupling means (13, 14) to define at least one of said housing seats (15, 20), and by the fact that said coupling means (13, 14) comprise at least one pair of notches each of which is formed in the proximity of the lower end portion (18) of said sheet-shaped elements (11, 12) which are formed below said housing seats (15, 20) and are able to allow the association by mutual sliding of said sheet-shaped elements (11, 12).

2. Container (1) according to claim 1, **characterized in that** each of said sheet-shaped elements (11, 12) comprises at least one groove (17, 19) formed in the proximity of the upper end portion (16) of the same and defining at least one of said housing seats (15, 20).

3. Container (1) according to claim 2, **characterized in that** said grooves (17, 19) comprise an upper portion (17) defining said first housing seat (15) and a lower portion (19) defining said second housing seat (20).

4. Container (1) according to claim 3, **characterized in that** said upper portion (17) comprises first shaped edges (22) so as to allow the insertion to measure of said dental implant (4) in said first housing seat (15) and said lower portion (19) comprises second shaped edges (25) so as to allow the insertion to measure of said supporting element (21) in said second housing seat (20).

5. Container (1) according to claim 4, **characterized in that** said first edges (22) comprise a joining narrowing (23) to said lower portion (19) which is able to abut against said dental implant (4).

6. Container (1) according to claim 4, **characterized in that** said second edges (25) are converging towards each other to define a holding portion (26) to hold said supporting element (21).

## Patentansprüche

1. Behälter (1) für Zahnimplantate, umfassend eine Haltebasis (2), ein oberes Ende (5) und mindestens ein Verschlusselement (6), das mit dem oberen Ende (5) verbindbar ist, einen Körper (11, 12), der zum Messen in den Behälter (1) einsetzbar ist und seinerseits mindestens einen ersten Aufnahmesitz (15) eines Zahnimplantats (4) umfasst, **dadurch gekennzeichnet, dass** der Körper (11, 12) mindestens einen zweiten Aufnahmesitz (20) eines Stützelements (21) für die Zahnimplantologie umfasst, und mindestens zwei blattförmige Elemente, die durch Zwischenschaltung von Kopplungsmitteln (13, 14) miteinander verbindbar sind, um mindestens einen der Aufnahmesitze (15, 20) zu definieren, und dadurch, dass die Kopplungsmittel (13, 14) mindestens ein Paar Kerben umfassen, von denen jede in der Nähe des unteren Endabschnitts (18) der blattförmigen Elemente (11, 12) ausgebildet ist, die unterhalb der Aufnahmesitze (15, 20) ausgebildet sind und in der Lage sind, die Verbindung durch gegenseitiges Gleiten der blattförmigen Elemente (11, 12) zu ermöglichen.

2. Behälter (1) nach Anspruch 1, **dadurch gekennzeichnet, dass** jedes der blattförmigen Elemente (11, 12) mindestens eine Nut (17, 19) aufweist, die in der Nähe des oberen Endabschnitts (16) desselben ausgebildet ist und mindestens einen der Aufnahmesitze (15, 20) definiert.

3. Behälter (1) nach Anspruch 2, **dadurch gekennzeichnet, dass** die Nuten (17, 19) einen oberen Abschnitt (17), der den ersten Aufnahmesitz (15) definiert, und einen unteren Abschnitt (19), der den zweiten Aufnahmesitz (20) definiert, umfassen.

4. Behälter (1) nach Anspruch 3, **dadurch gekennzeichnet, dass** der obere Abschnitt (17) erste geformte Ränder (22) aufweist, um so das Einsetzen des Zahnimplantats (4) in den ersten Aufnahmesitz (15) zum Messen zu ermöglichen, und der untere Abschnitt (19) zweite geformte Ränder (25) aufweist, um so das Einsetzen des Stützelements (21) in den zweiten Aufnahmesitz (20) zum Messen zu ermöglichen.

5. Behälter (1) nach Anspruch 4, **dadurch gekennzeichnet, dass** die ersten Ränder (22) eine verbindende Verengung (23) zu dem unteren Abschnitt (19) aufweisen, der an das Zahnimplantat (4) anstoßen kann.

6. Behälter (1) nach Anspruch 4, **dadurch gekennzeichnet, dass** die zweiten Ränder (25) zueinander konvergieren, um einen Halteabschnitt (26) zum Halten des Stützelements (21) zu definieren.

## Revendications

1. Contenant (1) pour implants dentaires, comprenant une base de retenue (2), une extrémité supérieure (5) et au moins un élément de fermeture (6) associable à ladite extrémité supérieure (5), un corps (11, 12) insérable pour mesurer dans ledit contenant (1) et, à son tour, comprenant au moins un première surface d'appui de logement (15) d'un implant dentaire (4), **caractérisé par le fait que** ledit corps (11, 12) comprend au moins une seconde surface d'appui de logement (20) d'un élément de support (21) pour l'implantologie dentaire, et au moins deux éléments en forme de plaque associables l'un à l'autre par interposition de moyens de couplage (13, 14) pour définir au moins l'une desdites surfaces d'appui de logement (15, 20), et **par le fait que** lesdits moyens de couplage (13, 14) comprennent au moins une paire d'encoches dont chacune est formée à proximité de la partie d'extrémité inférieure (18) desdits éléments en forme de plaque (11, 12) qui sont formés en dessous desdites surfaces d'appui de logement (15, 20) et sont aptes à permettre l'association par coulissement mutuel desdits éléments en forme de plaque (11, 12).

2. Contenant (1) selon la revendication 1, **caractérisé en ce que** chacun desdits éléments en forme de plaque (11, 12) comprend au moins une rainure (17, 19) formée à proximité de la partie d'extrémité supérieure (16) de celui-ci et définissant au moins l'une desdites surfaces d'appui de logement (15, 20).

3. Contenant (1) selon la revendication 2, **caractérisé en ce que** lesdites rainures (17, 19) comprennent une partie supérieure (17) définissant ladite première surface d'appui de logement (15) et une partie inférieure (19) définissant ladite seconde surface d'appui de logement (20).

4. Contenant (1) selon la revendication 3, **caractérisé en ce que** ladite partie supérieure (17) comprend des premiers bords mis en forme (22) de façon à permettre à l'insertion de mesurer ledit implant dentaire (4) dans ladite première surface d'appui de logement (15) et ladite partie inférieure (19) comprend des seconds bords mis en forme (25) de façon à permettre à l'insertion de mesurer ledit élément de support (21) dans ladite seconde surface d'appui de logement (20).

5. Contenant (1) selon la revendication 4, **caractérisé en ce que** lesdits premiers bords (22) comprennent un rétrécissement d'assemblage (23) sur ladite partie inférieure (19) qui est apte à buter contre ledit implant dentaire (4).

6. Contenant (1) selon la revendication 4, **caractérisé en ce que** lesdits seconds bords (25) convergent l'un vers l'autre pour définir une partie de retenue (26) pour retenir ledit élément de support (21).
